(19) Europäisches Patentamt
European Patent Office
Office européen des brevets

(11) EP 4 782 283 A1

(12) EUROPEAN PATENT APPLICATION
published in accordance with Art. 153(4) EPC

(43) Date of publication:
29.07.2026 Bulletin 2026/31

(21) Application number: 24868236.1

(22) Date of filing: 17.09.2024

(51) International Patent Classification (IPC):
B60R 21/264 (2006.01)

(52) Cooperative Patent Classification (CPC):
B60R 21/26; B60R 21/264

(86) International application number:
PCT/JP2024/033052

(87) International publication number:
WO 2025/063159 (27.03.2025 Gazette 2025/13)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 21.09.2023 JP 2023155665

(71) Applicant: Nippon Kayaku Kabushiki Kaisha
Tokyo 100-0005 (JP)

(72) Inventors:
• SHIMAZU, Sho
Himeji-shi, Hyogo 679-2123 (JP)
• SHIMIZU, Tomoya
Himeji-shi, Hyogo 679-2123 (JP)
• UEDA, Shinya
Himeji-shi, Hyogo 679-2123 (JP)
• TAKIZAWA, Haruki
Himeji-shi, Hyogo 679-2123 (JP)

(74) Representative: TBK
Bavariaring 4-6
80336 München (DE)

(54) GAS GENERATOR

(57) A gas generator (1) includes a housing including a cylindrical portion (10), a bolt (2), and a joint portion (6). The bolt (2) includes a rod-shaped portion (3), and is joined to an outer circumferential surface (10a) of the cylindrical portion (10). The joint portion (6) joins the cylindrical portion (10) and the bolt (2) as a result of solidification after melting of at least one of the outer circumferential surface (10a) and an axial end portion (4) of the rod-shaped portion (3). The rod-shaped portion (3) includes a male thread portion (3a). The cylindrical portion (10) has a plate thickness smaller than 1.3 mm. The gas generator (1) satisfies relation of $L > (A \times S1)/(t \times S2 \times G)$ where L represents a peripheral length of an outer edge of a boundary portion between the joint portion (6) and the outer circumferential surface (10a), A represents an effective cross-sectional area of the male thread portion (3a), S1 represents bolt strength of the bolt (2), t represents the plate thickness of the cylindrical portion (10), S2 represents tensile strength of the cylindrical portion (10), and G represents a shear modulus of the cylindrical portion (10).

FIG.5

## Description

### TECHNICAL FIELD

The present invention relates to a gas generator incorporated in a passenger protection apparatus that protects a driver and/or a passenger at the time of collision of a vehicle or the like, and particularly to a gas generator incorporated in an air bag apparatus equipped in a car or the like.

### BACKGROUND ART

From a point of view of protection of a driver and/or a passenger in a car or the like, an air bag apparatus which is a passenger protection apparatus has conventionally widely been used. The air bag apparatus is equipped for the purpose of protecting a driver and/or a passenger against shock caused at the time of collision of a vehicle or the like, and it receives a body of a driver or a passenger with the air bag serving as a cushion by instantaneously expanding and developing the air bag at the time of collision of a vehicle or the like.

A gas generator is equipment which is incorporated in this air bag apparatus, an igniter therein being ignited in response to power feed caused by a control unit at the time of collision of a vehicle or the like to thereby burn a gas generating agent with flame caused by the igniter and instantaneously generate a large amount of gas, and thus expands and develops an air bag.

Depending on a position of installation in a vehicle and the like or on specifications such as output, gas generators of various constructions are available. A gas generator called a cylinder-type gas generator represents one example. The cylinder-type gas generator has an outer geometry in an elongated columnar shape and it is suitably incorporated in a side air bag apparatus, a curtain air bag apparatus, a knee air bag apparatus, or a seat cushion air bag apparatus.

At an outer circumferential surface of a housing of a cylinder-type gas generator, a stud bolt for attachment to a retainer or the like of an air bag apparatus may be provided. Japanese Patent Laying-Open No. 2005-247289 (PTL 1) discloses a technique to attach a stud bolt by welding to a planarized outer circumferential surface of a housing of a gas generator. Japanese Patent Laying-Open No. 2005-313752 (PTL 2) discloses a technique to attach a head of a head bolt to a curved outer circumferential surface of a gas generator by welding, the head being provided with a curved surface.

### CITATION LIST

### PATENT LITERATURE

PTL 1: Japanese Patent Laying-Open No. 2005-247289

PTL 2: Japanese Patent Laying-Open No. 2005-313752

### SUMMARY OF INVENTION

### TECHNICAL PROBLEM

In order to realize safe operations of a gas generator, even when some kind of unintended external force is applied to the gas generator, a retainer, or the like, it is essential to prevent deformation, failure, or the like at a joint portion formed by welding between a housing and a stud bolt. This problem is particularly noticeable when a plate thickness of the housing is made smaller in order to meet demands for reduction in weight of the gas generator in recent years.

Therefore, the present invention was made to solve the problem described above, and an object thereof is to provide a gas generator that is less likely to suffer from failure at a joint portion between a housing and a bolt at the time of application of some kind of external force while reduction in weight is achieved.

### SOLUTION TO PROBLEM

A gas generator based on the present invention discharges gas toward the outside, and the gas generator includes a housing including a cylindrical portion, a bolt, and a joint portion. The bolt includes a rod-shaped portion, the bolt being joined to a curved outer circumferential surface of the cylindrical portion. The joint portion joins the cylindrical portion and the bolt to each other as a result of solidification after melting of at least one of the outer circumferential surface of the cylindrical portion and an axial end portion of the rod-shaped portion on a side of the cylindrical portion. The rod-shaped portion includes a male thread portion, the male thread portion being formed by provision of a helical groove in a circumferential surface of the rod-shaped portion. The cylindrical portion has a plate thickness smaller than 1.3 mm. The gas generator based on the present invention satisfies an expression (1) below, where L represents a peripheral length of an outer edge of a boundary portion between the joint portion and the outer circumferential surface of the cylindrical portion, A represents an effective cross-sectional area of the male thread portion, S1 represents bolt strength of the bolt, t represents the plate thickness of the cylindrical portion, S2 represents tensile strength of the cylindrical portion, and G represents a shear modulus of the cylindrical portion.

$$L > (A \times S1)/(t \times S2 \times G) \ldots (1)$$

### ADVANTAGEOUS EFFECTS OF INVENTION

According to the present invention, a gas generator that is less likely to suffer from failure at a joint portion between a housing and a bolt at the time of application of some kind of external force while reduction in weight is achieved can be provided.

BRIEF DESCRIPTION OF DRAWINGS

Fig. 1 is a schematic diagram of a cylinder-type gas generator according to an embodiment.

Fig. 2 is a perspective view, a side view, and a bottom view in a state before welding of a bolt shown in Fig. 1.

Fig. 3 is a schematic diagram showing a manner of attachment of the bolt shown in Fig. 2 to a housing.

Fig. 4 is a side view of the cylinder-type gas generator shown in Fig. 1.

Fig. 5 is an enlarged cross-sectional view of a main part in the vicinity of a joint portion shown in Fig. 4.

Fig. 6 shows a graph showing a result of measurement in a verification test 1.

Fig. 7 shows a graph showing a result of measurement in a verification test 2.

DESCRIPTION OF EMBODIMENTS

An embodiment of the present invention will be described hereinafter in detail with reference to the drawings. An embodiment shown below represents application of the present invention to a cylinder-type gas generator incorporated in a side air bag apparatus. The same or common elements in an embodiment shown below have the same reference characters allotted in the drawings and description thereof will not be repeated.

(Embodiment)

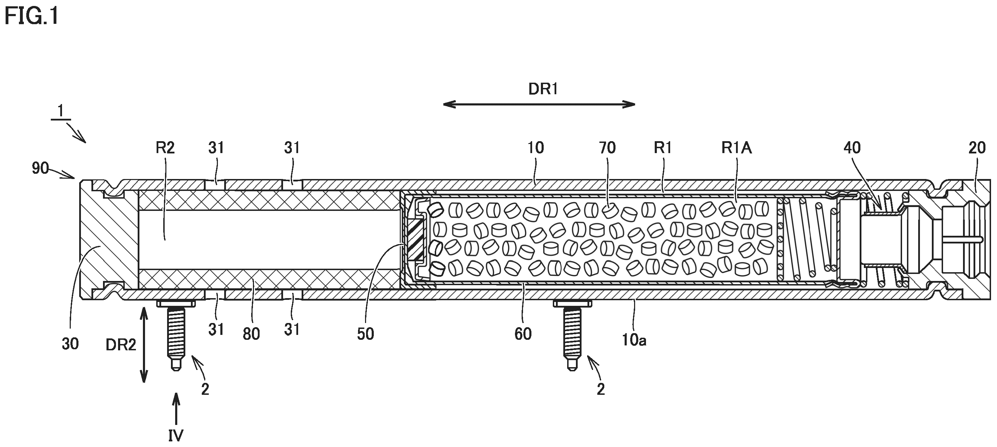

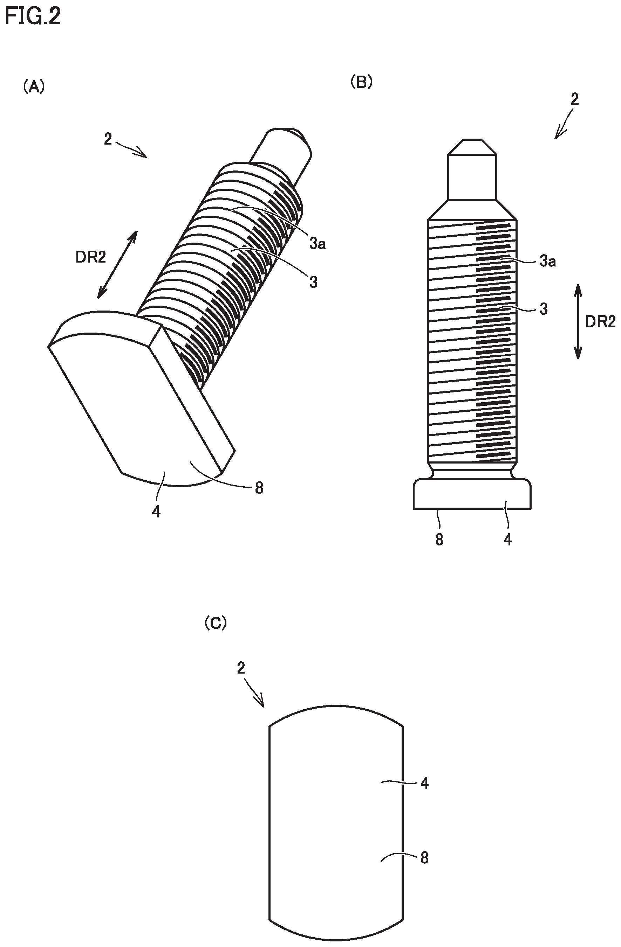

Fig. 1 is a schematic diagram of a cylinder-type gas generator according to an embodiment. A configuration of a cylinder-type gas generator 1 according to the present embodiment will initially be described with reference to Fig. 1. An arrow DR1 and an arrow DR2 shown in Fig. 1 indicate an axial direction of a housing main body 10 and an axial direction of a bolt 2, respectively (which is applicable also to Figs. 2 to 5 which will be described later), the housing main body and the bolt forming cylinder-type gas generator 1.

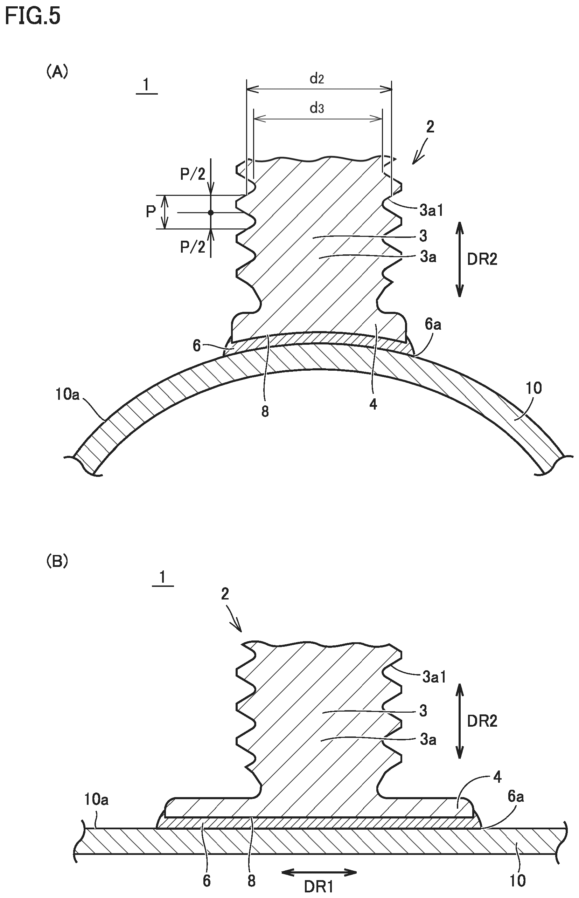

As shown in Fig. 1, cylinder-type gas generator 1 includes a housing 90 having an elongated, substantially columnar outer geometry, the housing having one end and the other end in an axial direction closed, and two bolts 2 joined to a curved outer circumferential surface 10a of housing main body 10 as a cylindrical portion that forms housing 90, with a joint portion 6 (see Fig. 5 or the like which will be described later) being interposed.

A retainer or the like of an air bag apparatus is attached to bolt 2. For example, a bolt composed of a material such as carbon steel for cold heading (SWCH) or the like is employed as bolt 2. The number of bolts 2 is not particularly limited to two, and a single bolt 2 may be provided or three or more bolts 2 may be provided.

Housing 90 includes housing main body 10, a holder 20, and a closing member 30. Inside housing 90 formed from housing main body 10 and the like, an igniter 40, a separation wall member 50, an accommodation chamber defining member 60, a gas generating agent 70, a filter 80, and the like as internal components are accommodated. Inside housing 90, a combustion chamber R1 where gas generating agent 70 among the internal components described above is mainly arranged and a filter chamber R2 where filter 80 is arranged are located.

Housing main body 10 forms a circumferential wall portion of housing 90. Housing main body 10 is formed from an elongated, substantially cylindrical member having openings formed at respective opposing ends in the axial direction thereof (see arrow DR1). For example, carbon steel tubes for general structure (STK), carbon steel tubes for machine structure (STKM), or the like is used as a member that forms housing main body 10. Housing main body 10 has an outer diameter, for example, preferably not smaller than 15 mm and not larger than 40 mm.

Housing main body 10 has a plate thickness, for example, preferably smaller than 1.3 mm, more suitably smaller than 1.1 mm, and further suitably smaller than 0.9 mm. Reduction in weight of cylinder-type gas generator 1 can thus be achieved. Housing main body 10 has the plate thickness, for example, preferably larger than 0.5 mm.

Holder 20 is fixed to housing main body 10 to close one end of housing 90 in the axial direction thereof. Closing member 30 is fixed to housing main body 10 to close the other end of housing 90 in the axial direction of housing main body 10.

Igniter 40 serves to burn gas generating agent 70 and assembled to one end of housing 90 by being supported by holder 20. Igniter 40 is thus arranged to face a space inside housing 90.

At a prescribed position in the space inside housing 90, separation wall member 50 as a partition portion is arranged. The space inside housing 90 is thus partitioned into a combustion chamber R1 and a filter chamber R2 in the axial direction of housing main body 10.

In a space (that is, combustion chamber R1) that lies between holder 20 and separation wall member 50 in the space inside housing 90, accommodation chamber defining member 60 and gas generating agent 70 are arranged.

Accommodation chamber defining member 60 is a member that defines a gas generating agent accommodation chamber R1A where gas generating agent 70 is accommodated. Accommodation chamber defining member 60 is formed from a relatively weak member so as to burst or melt with combustion of gas generating agent 70.

Gas generating agent 70 is an agent which is ignited by thermal particles produced as a result of activation of igniter 40 and produces gas as it burns. A non-azide-based gas generating agent is preferably employed as gas generating agent 70, and gas generating agent 70 is formed as a molding generally containing a fuel, an oxidizing agent, and an additive.

In a space (that is, filter chamber R2) that lies between closing member 30 and separation wall member 50 in the space inside housing 90, filter 80 is arranged. Filter 80 functions as cooling means for cooling gas by removing heat at a high temperature of gas when gas produced as a result of burning of gas generating agent 70 passes through filter 80 and also functions as removal means for removing residues (slag) or the like contained in gas.

A plurality of gas discharge openings 31 are provided along the circumferential direction and the axial direction of housing main body 10 in a portion defining filter chamber R2. The plurality of gas discharge openings 31 serve for guiding gas which has passed through filter 80 to the outside of housing 90.

Fig. 2(A), Fig. 2(B), and Fig. 2(C) are a perspective view, a side view, and a bottom view showing a state before welding of the bolt shown in Fig. 1, respectively. The configuration in the state before welding of bolt 2 in the present embodiment will now be described with reference to Fig. 2.

As shown in Fig. 2(A), Fig. 2(B), and Fig. 2(C), in the state before welding, bolt 2 includes a solid, substantially columnar rod-shaped portion 3 that extends along the axial direction thereof (see arrow DR2) and a flange portion 4 as an axial end portion provided at one end of rod-shaped portion 3 in the axial direction of bolt 2. When viewed along the axial direction of bolt 2, flange portion 4 is in a track shape. The track shape means a quadrangular shape with rounded corners, the track shape having an outer edge including two straight portions located in parallel to each other and two curved portions located in parallel to each other. The shape of flange portion 4 is not particularly limited to the track shape, and may be substantially circular, substantially elliptical, substantially rectangular, or the like.

Rod-shaped portion 3 includes a male thread portion 3a formed by provision of a helical groove 3a1 (see Fig. 5 which will be described later) around a circumferential surface thereof. Flange portion 4 includes an opposing surface 8. Opposing surface 8 is a surface to be opposed to outer circumferential surface 10a when bolt 2 is welded to outer circumferential surface 10a of housing main body 10.

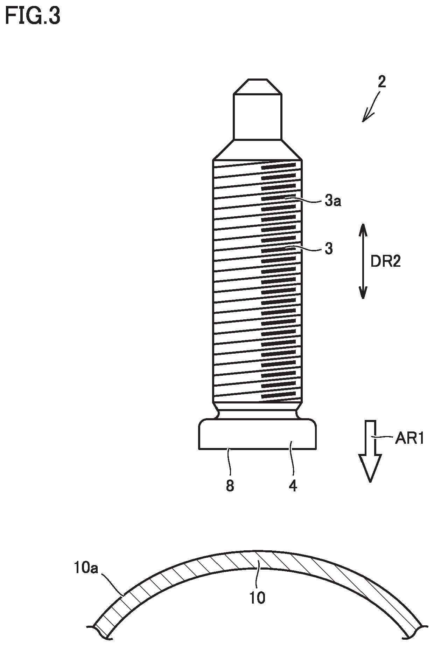

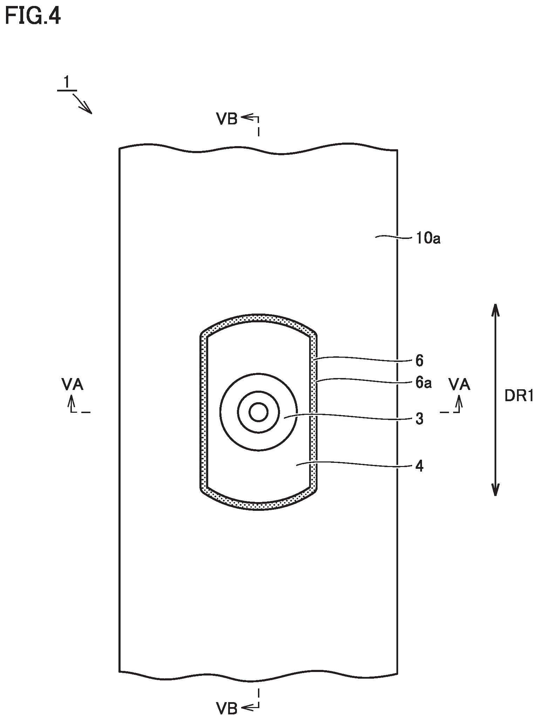

Fig. 3 is a schematic diagram showing a manner of attachment of the bolt shown in Fig. 2 to the housing. Fig. 4 is a side view of the cylinder-type gas generator when viewed from a direction shown with an arrow IV in Fig. 1. Fig. 5 is an enlarged cross-sectional view of a main part in the vicinity of the joint portion shown in Fig. 4.

Fig. 5(A) is an enlarged cross-sectional view of the main part in the vicinity of the joint portion along the line VA-VA shown in Fig. 4, and Fig. 5(B) is an enlarged cross-sectional view of the main part in the vicinity of the joint portion along the line VB-VB shown in Fig. 4. A method of attachment of bolt 2 to housing main body 10 in the present embodiment and the configuration in the vicinity of joint portion 6 in cylinder-type gas generator 1 according to the present embodiment will now be described with reference to Figs. 3 to 5. Fig. 3 shows housing main body 10 in a cross-section. For facilitated understanding, joint portion 6 is provided with a pattern in Fig. 4.

In attachment of bolt 2 to curved outer circumferential surface 10a of housing main body 10, initially, as shown in Fig. 3, a voltage is applied to bolt 2 and housing main body 10 arranged as being opposed to each other at a distance from each other. Then, bolt 2 is moved in a direction shown with an arrow AR1 in Fig. 3 while a state of application of the voltage to bolt 2 and housing main body 10 is maintained, so as to press flange portion 4 of bolt 2 against outer circumferential surface 10a of housing main body 10.

At that time, discharge occurs between flange portion 4 and outer circumferential surface 10a, and this portion is locally heated. As a result of this heating, a part of flange portion 4 and a part of outer circumferential surface 10a of housing main body 10 melt and elute. An eluted part of flange portion 4 and an eluted part of outer circumferential surface 10a of housing main body 10 are together referred to as a molten portion below.

As bolt 2 is further pressed against housing main body 10, the molten portion is sandwiched between a part of flange portion 4 that is not eluted and a part of outer circumferential surface 10a of housing main body 10 that is not eluted. The molten portion is thus drawn out along curved outer circumferential surface 10a of housing main body 10.

Thereafter, as the molten portion is solidified, joint portion 6 is formed at a position between bolt 2 and housing main body 10 as shown in Figs. 4 and 5(A) and 5(B). Bolt 2 is thus joined to outer circumferential surface 10a of housing main body 10 with joint portion 6 being interposed.

Cylinder-type gas generator 1 according to the present embodiment is configured to satisfy an expression (1) which will be described later, in order to make failure at joint portion 6 between housing main body 10 and bolt 2 less likely at the time of application of some kind of external force to gas generator 1 or the like, which will be described in detail below.

At the time of assembly of the cylinder-type gas generator to the retainer or the like or collision of a vehicle incorporating the cylinder-type gas generator, unintended external force may be applied to the cylinder-type gas generator. Without any measures against such an occasion, there is a concern about application of external force to the joint portion between the bolt and the housing main body and resultant deformation or failure of the joint portion. When such deformation or failure occurs at the joint portion, expected operations may not be achieved but malfunction may occur at the time of activation of the cylinder-type gas generator.

Therefore, if bolt 2 could break before application of excessive external force at joint portion 6, an unlikely event of failure or deformation of joint portion 6 could be prevented. Consequently, safe operations of cylinder-type gas generator 1 can be realized.

Three modes of break which are break in a tensile direction, break in a direction of shear, and break in a direction of torque are possible as the modes of break of joint portion 6. Among these, occurrence of break in the direction of torque is not realistic. In general, tensile strength tends to be higher than shear strength. Therefore, if break in the tensile direction of joint portion 6 is suppressed, break in the direction of shear is also accordingly suppressed. Therefore, it is important in cylinder-type gas generator 1 to avoid break of joint portion 6 in the tensile direction.

In other words, in cylinder-type gas generator 1, welding strength at joint portion 6 is required to be higher than tensile strength of bolt 2.

Tensile strength T1 of bolt 2 is expressed in an expression (11) below and welding strength T2 at joint portion 6 is expressed in an expression (12) below, where A represents an effective cross-sectional area of male thread portion 3a, S1 represents bolt strength of bolt 2, L represents a peripheral length of an outer edge 6a (see Figs. 4 and 5) of a boundary portion between joint portion 6 and outer circumferential surface 10a of housing main body 10, t represents the plate thickness of housing main body 10, S2 represents tensile strength of housing main body 10, and G represents a shear modulus of housing main body 10. Validity of the expression (11) and the expression (12) has been confirmed in verification tests 1 and 2 which will be described later.

$$T1 = A{\times}S1 \ ... \ (11)$$

$$T2 = L{\times}t{\times}S2{\times}G \ ... \ (12)$$

Effective cross-sectional area A of male thread portion 3a is expressed in an expression (13) below. $d_2$ represents an effective diameter of male thread portion 3a and $d_3$ represents a root diameter of male thread portion 3a. As shown in Fig. 5(A), effective diameter $d_2$ refers to such a diameter of a virtual cylinder that a width dimension of helical groove 3a1 and a width dimension of a thread of male thread portion 3a provided to be paired with helical groove 3a1 as a result of formation thereof each attain to P/2 where P represents a pitch dimension of male thread portion 3a. Root diameter $d_3$ refers to a diameter of a virtual cylinder in contact with the bottom of helical groove 3a1.

$$A = (\pi/4){\times}((d_2{+}d_3)/2)^2 \ ... \ (13)$$

Cylinder-type gas generator 1 according to the present embodiment satisfies an expression (1) below, the expression (1) being obtained by writing an inequality T2>T1 between tensile strength T1 of bolt 2 expressed in the expression (11) and welding strength T2 at joint portion 6 expressed in the expression (12) and organizing the inequality.

$$L > (A{\times}S1)/(t{\times}S2{\times}G) \ ... \ (1)$$

Namely, in cylinder-type gas generator 1 according to the present embodiment, peripheral length L of outer edge 6a of the boundary portion between joint portion 6 and outer circumferential surface 10a of housing main body 10 is configured to satisfy the expression (1).

By thus configuring peripheral length L to considerably be long so as to satisfy the expression (1), bolt 2 breaks before excessive external force is applied to joint portion 6 when load in the tensile direction is applied to bolt 2 and joint portion 6. Therefore, an unlikely event of failure or deformation of joint portion 6 can be prevented.

Therefore, with cylinder-type gas generator 1 according to the present embodiment, a gas generator that is less likely to suffer from failure at the joint portion between the housing and the bolt at the time of application of some kind of external force while reduction in weight is achieved can be obtained.

In cylinder-type gas generator 1 according to the present embodiment, while bolt 2 is joined to outer circumferential surface 10a of housing main body 10, an orientation of bolt 2 is adjusted such that a longitudinal direction of flange portion 4 matches with the axial direction of housing main body 10.

More specifically, as shown in Fig. 4, bolt 2 is joined to outer circumferential surface 10a of housing main body 10 such that, when viewed along the axial direction of rod-shaped portion 3, an outer dimension of flange portion 4 in the direction in parallel to the axial direction (see arrow DR1) of housing main body 10 is larger than the outer dimension of flange portion 4 in a direction orthogonal to the axial direction.

According to such a configuration, even when flange portion 4 is in a planar shape without being formed into a special shape, long peripheral length L can be secured while a gap between outer circumferential surface 10a of housing main body 10 and flange portion 4 is small. Therefore, according to such a configuration as well, failure or deformation of joint portion 6 can be prevented.

(Verification Test 1)

In the verification test 1, validity of the expression (11) was checked by comparing an actually measured value of tensile strength of a sample bolt prepared for the verification test 1 and a theoretical value calculated in accordance with the expression (11) that expressed tensile strength T1 of the bolt described above.

In the present verification test, ten samples 1 which were bolts having bolt strength of 667 MPa and ten samples 2 which were bolts having bolt strength of 776.25 MPa were prepared. A material for each of the sample 1 and the sample 2 was carbon steel for cold heading (SWCH18A), and the effective cross-sectional area of the sample 1 and the sample 2 was each 20.1 cm$^2$.

In verification, initially, each sample was attached to the housing main body. An attachment method is in accordance with the method described in the embodiment above. A material for the housing main body used here was carbon steel tubes for machine structure (STKM13C).

Then, the sample and the housing main body joined to each other with the joint portion being interposed were subjected to a tensile test, and tensile strength of the sample at the time of break of the sample was actually measured.

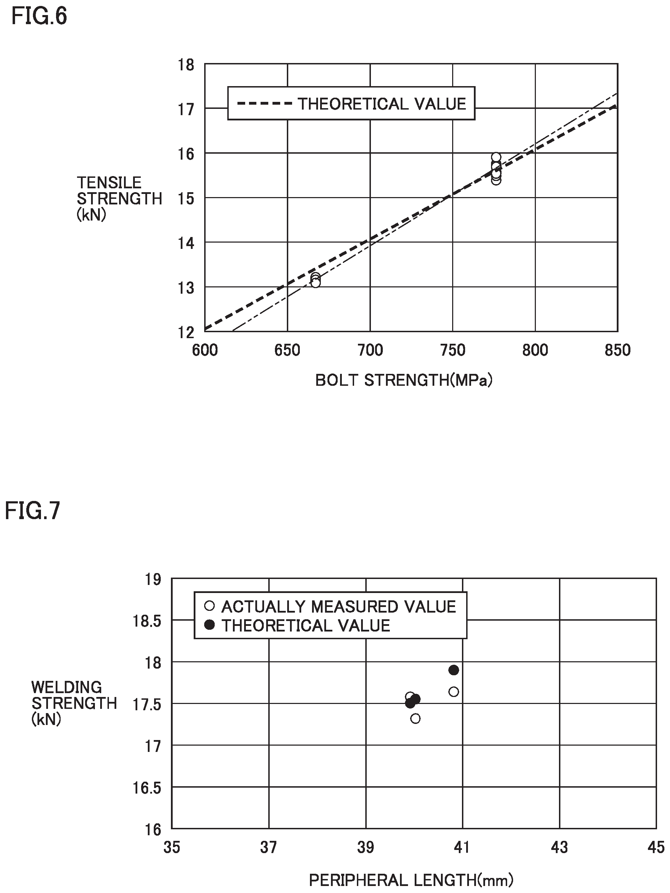

Fig. 6 shows a graph showing a result of measurement in the verification test 1. The abscissa represents bolt strength (MPa) and the ordinate represents tensile strength T1 (kN) of the bolt. Fig. 6 shows the theoretical value calculated in accordance with the expression (11) with a dashed line. A standard deviation of the actually measured values of ten samples 1 was 0.049 kN and the standard deviation of the actually measured values of ten samples 2 was 0.154 kN.

It was confirmed from the graph of the present verification test shown in Fig. 6 that a difference between the theoretical value and the actually measured value was considerably small. It was confirmed from the foregoing that the expression (11) expressing tensile strength T1 of the bolt was the valid expression.

(Verification Test 2)

In the verification test 2, validity of the expression (12) was checked by comparing an actually measured value of welding strength at the joint portion for attachment of the bolt to the housing main body and a theoretical value calculated in accordance with the expression (12) that expressed welding strength T2 at the joint portion described above.

In the present verification test, a bolt having bolt strength high to such an extent that the bolt does not break before the joint portion in order to have the joint portion break in the tensile direction was prepared, and this bolt was attached to the housing main body. The material for the housing main body used here was carbon steel tubes for machine structure (STKM13C) and the plate thickness of the housing main body was 1.0 mm.

Then, the peripheral length of the joint portion (more specifically, the peripheral length of the outer edge of the boundary portion between the joint portion and the outer circumferential surface of the housing main body) was actually measured. Then, the bolt and the housing main body joined to each other with the joint portion being interposed were subjected to the tensile test and the welding strength at the joint portion at the time of break of the joint portion was actually measured. The present verification test was conducted three times in total, with the peripheral length of the joint portion being varied.

Fig. 7 shows a graph showing a result of measurement in the verification test 2. The abscissa represents the peripheral length (mm) of the joint portion and the ordinate represents welding strength T2 (kN) at the joint portion.

It was confirmed from the graph of the present verification test shown in Fig. 7 that a difference between the theoretical value and the actually measured value was considerably small. It was confirmed from the foregoing that the expression (12) expressing welding strength T2 at the joint portion was the valid expression.

(Additional Aspects)

Characteristic features of the gas generator disclosed in the embodiment described above are summarized as below.

[Additional Aspect 1]

A gas generator that discharges gas toward outside includes

a housing including a cylindrical portion,
a bolt including a rod-shaped portion, the bolt being joined to a curved outer circumferential surface of the cylindrical portion, and
a joint portion that joins the cylindrical portion and the bolt to each other as a result of solidification after melting of at least one of the outer circumferential surface of the cylindrical portion and an axial end portion of the rod-shaped portion on a side of the cylindrical portion,
the rod-shaped portion includes a male thread portion, the male thread portion being formed by provision of a helical groove in a circumferential surface of the rod-shaped portion,
the cylindrical portion has a plate thickness smaller than 1.3 mm, and
the gas generator satisfies an expression (1) below, where L represents a peripheral length of an outer edge of a boundary portion between the joint portion and the outer circumferential surface of the cylindrical portion, A represents an effective cross-sectional area of the male thread portion, S1 represents bolt strength of the bolt, S2 represents tensile strength of the cylindrical portion, t represents the plate thickness of the cylindrical portion, and G represents a shear modulus of the cylindrical portion.

$$L > (A \times S1)/(t \times S2 \times G) \ ... \ (1)$$

[Additional Aspect 2]

In the gas generator described in Additional Aspect 1, when viewed along an axial direction of the rod-shaped portion, an outer dimension of the axial end portion in a direction in parallel to an axial direction of the cylindrical portion is larger than the outer dimension of the axial end portion in a direction orthogonal to the axial direction of the cylindrical portion.

[Additional Aspect 3]

In the gas generator described in Additional Aspect 2, the axial end portion is formed by a flange portion.

[Additional Aspect 4]

In the gas generator described in Additional Aspect 3, when viewed along the axial direction of the rod-shaped portion, the flange portion is in a track shape.

[Additional Aspect 5]

In the gas generator described in any one of Additional Aspects 1 to 4, the cylindrical portion has the plate thickness smaller than 1.1 mm.

(Other Forms etc.)

The shape, the configuration, the size, the number, the material, or the like of each component shown in the embodiment of the present invention described above can variously be modified within the scope not departing from the gist of the present invention.
In addition, characteristic features shown in the embodiment of the present invention described above can naturally be combined with one another within the scope not departing from the gist of the present invention.
The embodiment disclosed herein is thus illustrative and non-restrictive in every respect. The technical scope of the present invention is delimited by the terms of the claims and includes any modifications within the scope and meaning equivalent to the terms of the claims.

REFERENCE SIGNS LIST

1 cylinder-type gas generator; 2 bolt; 3 rod-shaped portion; 3a male thread portion; 3a1 helical groove; 4 flange portion; 6 joint portion; 6a outer edge; 8 opposing surface; 10 housing main body; 10a outer circumferential surface; 20 holder; 30 closing member; 31 gas discharge opening; 40 igniter; 50 separation wall member; 60 accommodation chamber defining member; 70 gas generating agent; 80 filter; 90 housing; R1 combustion chamber; R1A gas generating agent accommodation chamber; R2 filter chamber.

**Claims**

1. A gas generator that discharges gas toward outside, the gas generator comprising:

   a housing including a cylindrical portion;
   a bolt including a rod-shaped portion, the bolt being joined to a curved outer circumferential surface of the cylindrical portion; and
   a joint portion that joins the cylindrical portion and the bolt to each other as a result of solidification after melting of at least one of the outer circumferential surface of the cylindrical portion and an axial end portion of the rod-shaped portion on a side of the cylindrical portion, wherein the rod-shaped portion includes a male thread portion, the male thread portion being formed by provision of a helical groove in a circumferential surface of the rod-shaped portion,
   the cylindrical portion has a plate thickness smaller than 1.3 mm, and
   the gas generator satisfies an expression (1) below

   $$L > (A \times S1)/(t \times S2 \times G) \ ... \ (1)$$

   where L represents a peripheral length of an outer edge of a boundary portion between the joint portion and the outer circumferential surface of the cylindrical portion, A represents an effective cross-sectional area of the male thread portion, S1 represents bolt strength of the bolt, S2 represents tensile strength of the cylindrical portion, t represents the plate thickness of the cylindrical portion, and G represents a shear modulus of the cylindrical portion.

2. The gas generator according to claim 1, wherein when viewed along an axial direction of the rod-shaped portion, an outer dimension of the axial end portion in a direction in parallel to an axial direction of the cylindrical portion is larger than the outer dimension of the axial end portion in a direction orthogonal to the axial direction of the cylindrical portion.

3. The gas generator according to claim 2, wherein the axial end portion is formed by a flange portion.

4. The gas generator according to claim 3, wherein when viewed along the axial direction of the rod-shaped portion, the flange portion is in a track shape.

5. The gas generator according to claim 1, wherein the cylindrical portion has the plate thickness smaller than 1.1 mm.

FIG.1

EP 4 782 283 A1

# FIG.2

(A)

(B)

(C)

FIG.3

FIG.4

## FIG.5

(A)

(B)

## FIG.6

## FIG.7

## INTERNATIONAL SEARCH REPORT

| International application No. |
| --- |
| **PCT/JP2024/033052** |

**A. CLASSIFICATION OF SUBJECT MATTER**

***B60R 21/264*** (2006.01)i
FI:    B60R21/264

According to International Patent Classification (IPC) or to both national classification and IPC

**B. FIELDS SEARCHED**

Minimum documentation searched (classification system followed by classification symbols)

B60R21/16

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2019-104448 A (NIPPON KAYAKU KABUSHIKI KAISHA) 27 June 2019 (2019-06-27) paragraph [0046], fig. 5 | 1-5 |
| A | JP 2005-247289 A (DAICEL CHEM. IND. LTD.) 15 September 2005 (2005-09-15) | 1-5 |
| A | JP 2005-313752 A (NIPPON KAYAKU KABUSHIKI KAISHA) 10 November 2005 (2005-11-10) | 1-5 |

☐ Further documents are listed in the continuation of Box C.        ☑ See patent family annex.

| | | |
| --- | --- | --- |
| \* | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **04 October 2024** | **22 October 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

| International application No. |
| PCT/JP2024/033052 |

| Patent document cited in search report | | | Publication date (day/month/year) | Patent family member(s) | | | Publication date (day/month/year) |
|---|---|---|---|---|---|---|---|
| JP | 2019-104448 | A | 27 June 2019 | (Family: none) | | | |
| JP | 2005-247289 | A | 15 September 2005 | US | 2005/0189751 | A1 | |
| | | | | WO | 2005/075260 | A1 | |
| | | | | CN | 1914068 | A | |
| JP | 2005-313752 | A | 10 November 2005 | (Family: none) | | | |

Form PCT/ISA/210 (patent family annex) (July 2022)

**REFERENCES CITED IN THE DESCRIPTION**

**Patent documents cited in the description**

- JP 2005247289 A

- JP 2005313752 A